# FASCICULE DE BREVET EUROPEEN

(11) **EP 3 402 157 B1**
(45) Date de publication et mention de la délivrance du brevet: **09.09.2020**
(21) Numéro de dépôt: 18171631.7
(22) Date de dépôt: 09.05.2018
(51) Int. Cl.: H04L 29/06, H04W 4/80, H04W 4/00, H04W 12/06, H04W 12/00

(54) **PROCÉDÉ DE SÉCURISATION EN VUE D'UN APPAIRAGE HORS BANDE DANS LA BANDE**
SICHERHEITSVERFAHREN FÜR OUT-OF-BAND-PAIRING IN THE BAND
SECURITY METHOD FOR OUT-OF-BAND PAIRING IN THE BAND

(30) Priorité: 12.05.2017 FR 1754202
(43) Date de publication de la demande: 14.11.2018
(73) Titulaire: Oberthur Cash Protection, 21000 Dijon (FR)
(72) Inventeur: LAMOTTE, Thierry, 71700 Tournus (FR); MARSAUD, Erwan, 21490 Saint Julien (FR)
(74) Mandataire: Oudin, Stéphane

(56) Documents cités:
- US-A1- 2015 222 517
- US-A1- 2017 127 304
- Bluetooth Sig: "BLUETOOTH SPECIFICATION Version 4.2 [Vol 3, Part H] SECURITY MANAGER SPECIFICATION", , 2 décembre 2014 (2014-12-02), XP055414765, Extrait de l'Internet: URL:https://www.bluetooth.org/DocMan/handl ers/DownloadDoc.ashx?doc_id=286439 [extrait le 2017-10-11]

## Description

### Domaine technique

La présente invention concerne le domaine général des connexions sécurisées employant la technologie Bluetooth.

L'invention concerne plus particulièrement un procédé d'appairage (également dénommé jumelage) simple et sécurisé SSP (Secure Simple Pairing) de type « hors bande » (OOB : Out Of Band), qui permet d'améliorer très significativement le transfert sécurisé des informations, en utilisant un canal dédié séparé du canal principal de communication et ne nécessitant ni intervention humaine (par exemple : frappe sur un clavier) ni emploi d'un moyen de communication complémentaire (par exemple : moyen de communication en champ proche NFC).

### Technique antérieure

Les systèmes et procédés d'appairage actuels requièrent fréquemment l'emploi de codes qu'un opérateur doit entrer manuellement (principe du « PassKey Entry »), l'emploi de clés d'authentification, ou encore l'accès à un réseau de communication global.

Les documents WO 16058965 A1, EP 2958354 A1 et US 9215075 BA illustrent ces principes de l'art antérieur avec tous les inconvénients qu'il comporte, liés à leur complexité d'utilisation et ce d'autant plus lorsque, ni intervention humaine, ni emploi d'un moyen de communication complémentaire n'est désiré utilisé ou tout simplement non disponible.

En effet, de tels systèmes et procédés restent contraignants et peu pratiques car ils sont d'une part particulièrement vulnérables notamment aux attaques de type « homme du milieu » (Man In The Middle : MITM) et d'autre part ils nécessitent, même de manière limitée, l'usage de technologies souvent peu sécurisées (par exemple : Wi-Fi, NFC) et/ou l'utilisation additionnelle d'algorithmes cryptographiques à clés publiques significativement lourds et contraignants lorsque ces derniers sont utilisés avec des systèmes embarqués à faible ressource.

### Exposé de l'invention

La présente invention vise à remédier aux inconvénients de l'art antérieur précités, en présentant un procédé de sécurisation en vue d'un appairage SSP de type « hors bande » ne nécessitant ni intervention humaine ni emploi d'un moyen de communication complémentaire.

Ainsi, il est proposé un procédé de sécurisation en vue sans intervention humaine d'un appairage simple et sécurisé SSP hors bande dans la bande entre un élément périphérique et au moins un élément central possédant chacun une interface de communication sans fil, remarquable en ce qu'il comprend au moins les étapes suivantes :
- initier une connexion entre ledit élément périphérique et ledit élément central, afin d'établir une connexion non encryptée entre ledit élément périphérique et ledit élément central via ladite interface de communication sans fil, ledit élément périphérique mettant en œuvre un serveur de données pour lequel initialement seul un ensemble restreint Eᵣ de requêtes et réponses est accessible audit élément central,
- construire une pile protocolaire de communication entre ledit élément périphérique et ledit élément central à partir dudit ensemble restreint Eᵣ de requêtes et réponses accessibles audit élément central, ladite pile protocolaire ainsi construite exploitant un protocole mettant en œuvre, entre autres, une procédure d'authentification forte et mutuelle entre ledit élément périphérique et ledit élément central,
- établir, à l'issue de ladite procédure d'authentification forte et mutuelle, un canal sécurisé de communication entre ledit élément périphérique et ledit élément central,
- échanger, via ledit canal sécurisé, les données nécessaires à l'appairage SSP, et procéder audit appairage.

Selon l'invention, on entend par « élément périphérique » un système (tel que par exemple un système embarqué) apte, entre autres, à mettre à disposition et à alimenter (mettre en œuvre) une collection de données sous la forme d'un serveur de données, tandis que l'« élément central » (encore appelé « système externe » ou « système distant ») est apte à se connecter et accéder audit serveur de données en tant que client.

Ledit élément périphérique est par exemple un conteneur de transport de fonds tel qu'un conteneur de transport de valeurs, ou un système de protection de distributeur à billets, ou, encore et de manière non exhaustive, un coffre de dépôts d'espèces résidentiel ou semi-résidentiel, une armoire à compartiments maculant, etc... Bien entendu, ledit élément périphérique est prévu pour évoluer et être déplacé dans des zones non sécurisées et donc présentant des risques significatifs d'attaques.

Ledit élément central est par exemple une machine de type PC, ou bien tout autre système embarqué.

Il est ici à noter qu'entre ledit élément périphérique et ledit élément central peuvent également s'insérer une ou des passerelles de communication (transport BLE, transport IP, etc.) telles que, par exemple, un téléphone portable, une tablette, un réseau IP, etc... Cependant, ledit élément central, le plus souvent, consistera finalement, et en terminaison de communication, en une machine de type PC (qui, elle, sera localisée quasi-systématiquement dans une zone physiquement sécurisée).

L'invention proposée repose ainsi, entre autres, sur l'existence d'une architecture très répandue, l'architecture client/serveur.

Ainsi, la présente invention implique une réelle et importante activité inventive car le procédé ici proposé et qui est revendiqué apporte une solution particulièrement efficace aux inconvénients présentés et ci-avant explicités de l'art antérieur ainsi qu'une réponse extrêmement puissante au problème technique suivant se posant. En effet, le transfert des informations doit, dans le présent cas, inévitablement s'effectuer hors bande pour que le lien radio repose sur des bases solides et ne puisse être aisément déchiffrable. Or, dans la présente application et dans un certain nombre d'autres applications de même type, le système communiquant ne dispose d'aucun mécanisme de réponse tel que, par exemple, un clavier, un écran ou un émetteur récepteur de type NFC, mécanisme qui permettrait de procéder à un appairage BLE sûr et efficace. Pour résoudre ce délicat problème technique d'absence de mécanisme de réponse, il a été imaginé de construire une pile protocolaire de communication dont les couches successives permettent de transporter un protocole sériel classique. Ainsi, un canal sécurisé transporté par la radio BLE peut être construit pour enfin procéder à un appairage BLE hors bande dans la bande. Le procédé selon l'invention ici exploité et revendiqué fournit donc une solution authentiquement efficace audit problème technique complexe et incontournable exposé ci-dessus. Ce besoin d'une telle solution efficace, solution répondant de manière particulièrement adaptée audit besoin, existe et était ressenti depuis un certain nombre d'années. Compte tenu des sérieuses attentes, dans ce domaine, d'une telle solution mettant en œuvre l'ensemble des caractéristiques techniques revendiquées et détaillées dans la suite de la description, le fait de satisfaire de manière efficace et définitive à ce besoin réellement ressenti engendrera, en outre, inévitablement un authentique succès commercial.

La communication entre ledit élément périphérique et ledit élément central est susceptible de faire appel à un ensemble global E_{g} de requêtes et réponses.

Selon l'invention, ledit élément périphérique met en œuvre un serveur de données pour lequel initialement (c'est-à-dire au lancement du protocole) seul un ensemble restreint Eᵣ de requêtes et réponses parmi l'ensemble global E_{g} est accessible audit élément central.

On entend par « accessible » le fait que lesdites requêtes et réponses sont mises en œuvre librement, par exemple sans faire l'objet d'aucune vérification de niveau d'authentification ou de niveau de chiffrement.

Les requêtes et réponses n'appartenant pas audit ensemble restreint Eᵣ sont rendues au moins temporairement inaccessibles (par exemple par une restriction des droits en écriture/lecture et par le fait qu'elles nécessitent un certain niveau d'authentification pour le client ou un certain niveau de chiffrement, ceux-ci n'étant jamais acquis au début du procédé).

Possiblement, les requêtes et réponses n'appartenant pas audit ensemble restreint Eᵣ peuvent être rendues accessibles au client à un moment plus tardif ou après un certain nombre d'étapes à franchir dans ledit procédé. Préférentiellement, le paramétrage et la programmation de ladite accessibilité sont prévus afin d'être réversibles à tout moment.

Avantageusement, ladite pile protocolaire comprend, entre autres, une couche spécialisée dans la fragmentation/défragmentation, une couche spécialisée dans le chiffrement/déchiffrement.

La pile protocolaire est construite à partir dudit ensemble restreint Eᵣ de requêtes et réponses accessibles audit élément central.

Ci-après sont décrites les couches protocolaires de ladite pile, du plus haut niveau vers le niveau le plus bas
- un jeu de requêtes/réponses permettant la procédure d'authentification mutuelle,
- un jeu de requêtes/réponses permettant la « transmission des données d'appairage de la radio Bluetooth », par exemple 6 chiffres ou encore la clé temporaire de chiffrement,
- un jeu de requêtes/réponses « métier » permettant l'interaction avec, par exemple, le conteneur de transport de fonds,
- une couche qui est en charge d'accorder ou non l'acceptation d'une requête entrante en fonction de l'état courant de la procédure d'authentification. Par contre, les jeux de requêtes/réponses cités précédemment dits « métier » et de « transmission des données d'appairage de la radio Bluetooth » ne sont pas acceptés tant que l'authentification mutuelle n'est pas atteinte avec succès,
- une couche qui a pour fonction de former une unité de transport protocolaire, chaque unité de transport protocolaire étant composée d'un champ « requête ou réponse », d'un champ « longueur de données » et d'un champ « données correspondantes »,
- une couche qui est en charge d'encapsuler chaque unité de transport protocolaire dans une trame, la trame étant composée d'une unité de transport protocolaire et d'un champ permettant un contrôle d'intégrité sur le contenu de l'unité de transport protocolaire,
- une couche de fragmentation/défragmentation qui est en charge de découper ou de reconstituer les trames en tronçons de taille inférieure ou égale à la taille maximum admissible par les caractéristiques IN ou OUT de l'ensemble restreint Eᵣ d'un serveur GATT Bluetooth,
- une couche de chiffrement de chaque tronçon en fonction de l'état courant de la procédure d'authentification,
- une couche de transport BLE accédant à l'ensemble restreint Eᵣ dudit serveur GATT, composé de deux caractéristiques dites IN et OUT afin de communiquer avec la partie distante.

La pile protocolaire est, ainsi, avantageusement prévue pour exploiter un protocole mettant en oeuvre, entre autres, une procédure d'authentification forte et mutuelle entre ledit élément périphérique et ledit élément central.

Ladite procédure d'authentification forte et mutuelle entre ledit élément périphérique et ledit élément central met en œuvre :
- deux clés filles K_{aNSP} et K_{aNSC} issues d'une clé mère initiale Kₐ chargée dans ledit élément périphérique lors de sa fabrication. Il est ici, en outre, à noter que si le système extérieur est un système lui-même embarqué, il a été alors également chargé par cette clé Kₐ lors de sa fabrication. Par contre, s'il s'agit d'un système de type PC se trouvant en zone physiquement sécurisée, ce dernier a alors accès à cette clé Kₐ dans une base de données à accès sécurisé, ladite clé mère initiale Kₐ étant différenciée par le numéro de série (NS_{P}, NS_{C}) desdits éléments,
- deux nombres aléatoires (NA₁ : propre à l'élément périphérique, NA₂ : propre à l'élément central),
- un algorithme de chiffrement symétrique, tel que par exemple l'algorithme AES-128 (algorithme de chiffrement symétrique : Advanced Encryption Standard dit AES-[128, 192 ou 256 bits]),
et consiste en un échange en deux temps :
- une demande de génération desdits nombres aléatoires (NA₁, NA₂),
   ∘ ledit élément périphérique génère un aléa NA₁ et ledit élément périphérique envoie audit élément central son aléa NA₁ ainsi que son numéro de série NSₚ,
   ∘ ledit élément central génère un aléa NA₂ et ledit élément central envoie audit élément périphérique son aléa NA₂ ainsi que son numéro de série NS_{c},
- l'établissement d'un canal sécurisé de communication entre ledit élément périphérique et ledit élément central par :
   ∘ la génération, par les deux parties en communication que sont ledit élément périphérique et ledit élément central, d'une clé de session d'authentification KSₐ, destinée à permettre aux deux parties en communication que sont ledit élément périphérique et ledit élément central, de générer un certificat. Ce certificat est principalement basé sur la clé de session d'authentification KSa et des numéros de série (NS_{P}, NSc) desdits éléments en communication,
   ∘ chacune des deux parties en communication que sont ledit élément périphérique et ledit élément central, se transmet une portion distincte du certificat précédemment généré. Chacune des parties distantes est alors apte à vérifier la portion reçue en prouvant ainsi l'appartenance mutuelle à l'application.
   ∘ si la vérification des portions de certificat se termine avec succès, les deux parties en communication que sont ledit élément périphérique et ledit élément central, génèrent une clé de session de chiffrement KS_{c}, destinée à permettre le chiffrement des communications ultérieures via au moins ledit ensemble restreint Eᵣ de requêtes et réponses accessibles audit élément central. La clé de session de chiffrement KS_{c} s'élabore à partir de la clé de session d'authentification KSₐ et de la clé mère de chiffrement K_{c} chargée dans lesdits éléments lors de leur fabrication. Si le système extérieur ou élément central est un système lui-même embarqué, il a été alors également chargé par cette clé K_{c} à sa fabrication, et lorsqu'il s'agit d'un système de type PC se trouvant en zone physiquement sécurisée, ce dernier a alors accès à cette clé K_{c} dans une base de données à accès sécurisé.

Les numéros de série NS_{P} et NS_{C} sont chargés respectivement dans lesdits éléments périphérique et central lors de leur fabrication.

Préférentiellement, lesdits nombres aléatoires (NA₁, NA₂) sont respectivement générés par ledit élément périphérique et par ledit élément central.

Plus préférentiellement, ledit nombre aléatoire NA1 émis par ledit élément périphérique est généré par un Vrai Générateur de Nombres Aléatoires (certification selon la norme de sécurité FIPS 140-2). Egalement, ledit nombre aléatoire NA2 émis par ledit élément central peut être (mais non obligatoirement) généré via un pseudo-générateur (machine type PC). En effet, il est à noter qu'il est très préférable que NA1 et NA2 soient tous deux générés par un Vrai Générateur de Nombres Aléatoires (Vrai selon la norme de sécurité FIPS 140-2). Malheureusement peu de machines de type PC aujourd'hui possèdent un Vrai Générateur de Nombres Aléatoires, le plus souvent elles disposent de pseudo-générateurs.

Préférentiellement, selon l'invention, les clés de sécurité (clé mère d'authentification et clé mère de chiffrement, clé de session d'authentification et clé de session de chiffrement, etc.) sont des clés de cryptage dit symétrique, de préférence selon l'algorithme AES (128 bits, 192 bits ou 256 bits).

Préférentiellement, l'ensemble des clés mères attribuées audit élément périphérique sont stockées dans une zone mémoire non volatile. Encore plus préférentiellement, l'accès au composant comprenant ladite zone mémoire non volatile est apte à être verrouillé relativement à des tentatives d'accès physiques via une interface associée parmi les suivantes : JTAG (Join Test Action Group), SW (Sériai Wire, pcontrôleur ARM Cortex-M), Boot ROM (code dans la mémoire morte de démarrage) interne audit composant.

En cas d'attaque ou de comportement inusuel des systèmes en présence (élément périphérique, élément central) et de la communication, et selon la nature de l'attaque ou du comportement inusuel, au moins un mécanisme de protection desdits systèmes et de la communication est déclenché parmi, entre autres :
- la non divulgation de sa portion du certificat, par exemple dans le cas où l'élément central (système extérieur) ne s'identifie pas correctement,
- l'engagement d'une sécurité temporelle de blocage des demandes d'authentification (plus aucune communication n'est possible), par exemple dans le cas où l'authentification échoue répétitivement (préférentiellement, la valeur de ce temps de blocage augmente exponentiellement avec le nombre d'échecs d'authentification), la déconnexion de la communication radio Bluetooth à l'initiative dudit élément périphérique, par exemple, au-delà d'un certain nombre d'échecs d'authentification et notamment au-delà de trois échecs consécutifs.
- la perte de la clé de session d'authentification, par exemple dans le cas où l'authentification mutuelle est atteinte avec succès et qu'une période d'inactivité supérieure à un temps défini survient, par exemple, après soixante secondes sans aucun échange entre ledit périphérique et ledit central, dans ce cas, l'élément central (système extérieur, système distant) devra alors réitérer son authentification.

Préférentiellement (mais de manière non restrictive), les mécanismes de protection desdits systèmes et de la communication présentés ci-avant sont déclenchés en cas d'attaque ou de comportement inusuel des systèmes en présence au cours de la procédure d'authentification forte et mutuelle.

Avantageusement, ladite clé de session d'authentification KSₐ, émise au cours de la procédure d'authentification forte et mutuelle entre ledit élément périphérique et ledit élément central, est générée, entre autres, à partir de ladite clé mère initiale Kₐ, desdits nombres aléatoires (NA₁, NA₂) et des numéros de série (NS_{P}, NSc) desdits éléments.

Avantageusement, ledit protocole assurant le mécanisme d'authentification forte et mutuelle entre ledit élément périphérique et ledit élément central est un protocole sériel.

Ledit protocole sériel est habituellement transporté sur un support physique tel que, un port RS232, ou un port USB, cependant, dans le cas présent, il est transporté par la liaison radio Bluetooth par l'intermédiaire de l'ensemble restreint Eᵣ du serveur GATT et de la pile protocolaire.

Préférentiellement, ledit protocole sériel est de type « half-duplex » (fonctionnant alternativement dans les deux sens).

Avantageusement, chaque trame de requêtes et réponses émise au cours dudit protocole sériel est constituée de fragments de taille égale.

En outre, chaque fragment est, avant son envoi, tout d'abord rendu unique en insérant un aléa ou incrément 'ALEAINC' dans la donnée en clair à transmettre, puis chiffré en employant, entre autres, une clé de session de chiffrement KS_{c}.

Avantageusement, ladite clé de session de chiffrement KS_{c} est générée à partir d'une clé mère de chiffrement K_{c} (AES [128, 192 ou 256 bits]) ayant été initialement chargée respectivement lors de sa fabrication dans ledit élément périphérique. Elle peut être également chargée dans ledit élément central, en effet, si ledit élément central extérieur est un système lui-même embarqué, il a été alors également chargé par cette clé K_{c} à sa fabrication, si ce dernier est un système de type PC se trouvant en zone physiquement sécurisée, il a alors accès à cette clé K_{c} dans une base de données à accès sécurisé.

Avantageusement, ladite clé de session de chiffrement KS_{c} est obtenue à partir de la clé mère de chiffrement K_{c} diversifiée par ladite clé de session d'authentification KSₐ.

Avantageusement, le procédé de sécurisation selon l'invention dispose en outre, dans des variantes avancées, de mécanismes de sécurité complémentaires tels que :
- le refus de requêtes autres que les requêtes permettant une authentification tant que la phase d'authentification ne s'est pas achevée avec succès (vérification validée de(s) certificat(s)),
- la perte automatique de la clé de session d'authentification KSₐ et de la clé de session de chiffrement KS_{c}, par exemple après une période d'inactivité dans la communication supérieure à un temps prédéfini par exemple suite à une période d'inactivité de soixante secondes.

En cas de perte simultanée de la clé de session d'authentification KSₐ et de la clé de session de chiffrement KS_{c}, et/ou après une période d'inactivité, l'élément central doit réitérer son authentification (système distant), tandis que les éléments central et périphérique devront régénérer leurs clés de session de chiffrement KS_{c}.

Préférentiellement, suite à la perte simultanée de la clé de session d'authentification KSₐ et de la clé de session de chiffrement KS_{c}, les éléments périphérique et central sont aptes à poursuivre leur communication (par exemple pour tenter une nouvelle authentification) de manière chiffrée (par exemple par l'usage d'une clé de chiffrement dédiée).

Plus préférentiellement, les éléments périphérique et central poursuivent leur communication de manière chiffrée à l'aide de ladite clé de session de chiffrement KS_{c} caduque.

Avantageusement, ladite clé de session de chiffrement KS_{c} caduque est remplacée pour les deux éléments en communication par une nouvelle clé de session de chiffrement, par changement à la volée, dès que l'authentification mutuelle est effectuée avec succès.

De manière tout à fait préférée, ladite interface de communication sans fil est radioconnectée selon la technologie Bluetooth basse consommation BLE et ledit serveur de données est un serveur GATT (Generic ATTribute Profile).

Dans ce cas, les fragments constituant chaque trame de requêtes et réponses (émise au cours dudit protocole sériel) présentent une taille (en octets) proche du maximum possible pour la radio BLE concernée. Ainsi, par exemple :
- dans le cas d'une radio BLE répondant à la norme 4.2 ou à une norme inférieure, le fragment aura une taille de 20 octets au plus,
- dans le cas d'une radio BLE répondant à la norme 5 ou à une norme supérieure, le fragment aura une taille égale ou supérieure à 20 octets, par exemple 240 octets.

Avantageusement, ledit ensemble restreint Eᵣ de requêtes et réponses accessibles audit élément central est un ensemble de caractéristiques liées à au moins un service dudit serveur GATT, par exemple un service, dit propriétaire, possédant un identifiant 128 bits nommé ici « Service Dialogue » comprenant seulement les deux caractéristiques citées ci-après IN et OUT.

Préférentiellement, ledit ensemble restreint Eᵣ de requêtes et réponses accessibles audit élément central est un ensemble de caractéristiques d'un des services dudit serveur GATT, par exemple, le service précité « Service Dialogue ».

Avantageusement, ledit ensemble restreint Eᵣ de caractéristiques dudit serveur GATT accessibles audit élément central comprend au moins :
une caractéristique dite IN pour l'émission de requêtes et pour laquelle le droit d'accès dudit élément central est de type ECRITURE-LECTURE, une caractéristique dite OUT pour l'émission de réponses et pour laquelle le droit d'accès dudit élément central est de type LECTURE-NOTIFICATION ou bien LECTURE-INDICATION.Il est ici à préciser que « Lecture-Notification » et « Lecture-Indication » sont deux types d'accès distincts. Le droit d'accès à la caractéristique dite OUT peut employer soit un accès dit « Lecture-Notification » ou bien un accès dit « Lecture-Indication », l'un ou l'autre convenant à la mise en œuvre du présent procédé.Le procédé selon la présente invention comprend enfin une étape consistant, une fois la procédure d'authentification réussie et un canal sécurisé de communication établi par le biais du chiffrement des données transitant par les caractéristiques dites IN et OUT du serveur GATT, à transmettre, par ce lien désormais sécurisé et à l'aide des requêtes/réponses permettant la « transmission des données d'appairage de la radio Bluetooth » de la pile protocolaire, les données secrètes nécessaires à l'initiation de la procédure d'appairage OOB de la radio Bluetooth, transmission qui aurait été opérée de manière standard, c'est-à-dire selon l'art antérieur disponible et donc avant d'avoir la possibilité d'exploiter avantageusement les caractéristiques revendiquées de la présente invention, par un lien Hors Bande, c'est-à-dire par un lien physique différent de la radio Bluetooth.

Enfin, hors du présent procédé mais néanmoins directement conditionné par celui-ci en ce qui concerne sa sûreté, une fois cette dernière étape de la procédure d'appairage OOB de la radio Bluetooth atteinte, ladite radio Bluetooth va dès lors, et de manière standard, permettre la sécurisation des données transitant dans l'air par le biais de sa propre procédure de chiffrement. Dans ce nouvel état atteint, toutes les caractéristiques du serveur GATT et les données applicatives qui s'y rattachent, initialement inaccessibles, car préférentiellement réputées restreintes d'accès tant qu'un niveau d'authentification et/ou de chiffrement suffisant n'a pas été atteint, deviennent accessibles et ce de manière sécurisée, par ledit élément central.

En ce qui concerne la susceptibilité d'application industrielle, il apparaît à l'évidence que l'invention permet authentiquement une sécurisation en amont des communications employant le principe du SSP hors bande, en créant un canal sécurisé de communication (dans la bande) permettant de s'affranchir avantageusement de moyens de communication complémentaires (Wi-Fi, NFC) et/ou de l'utilisation additionnelle d'algorithmes cryptographiques à clés publiques significativement lourds et contraignants lorsque ces derniers sont utilisés avec des systèmes embarqués à faible ressource, et ceci en garantissant par là-même un appairage indiscutablement sûr et fiable.

Ce procédé peut s'appliquer à tout type d'éléments périphériques et central et préférentiellement à des éléments embarqués, tels que des conteneurs de transport de fonds pour lesquels il est indispensable d'évoluer à tout instant dans un environnement hautement sécurisé.

Enfin, il va de soi que la présente invention ne se limite pas aux seules formes d'exécution décrites ci-avant, elle en embrasse, au contraire, toutes les variantes de réalisation et d'application respectant le même principe.

## Revendications

1. Procédé de sécurisation en vue d'un appairage simple et sécurisé SSP de type « hors bande » (OOB : Out Of Band) de la radio Bluetooth dans la bande entre un élément périphérique et au moins un élément central possédant chacun une interface de communication sans fil, **caractérisé en ce qu'**il comprend au moins les étapes suivantes
• initier une connexion entre ledit élément périphérique et ledit élément central, afin d'établir une connexion non encryptée entre ledit élément périphérique et ledit élément central via ladite interface de communication sans fil, ledit élément périphérique mettant en œuvre un serveur de données pour lequel initialement seul un ensemble restreint Eᵣ de requêtes et réponses est accessible audit élément central,
• construire une pile protocolaire de communication entre ledit élément périphérique et ledit élément central à partir dudit ensemble restreint Eᵣ de requêtes et réponses accessibles audit élément central, ladite pile protocolaire construite exploitant un protocole mettant en œuvre, entre autres, une procédure d'authentification forte et mutuelle entre ledit élément périphérique et ledit élément central,
• établir, à l'issue de ladite procédure d'authentification forte et mutuelle, un canal sécurisé de communication entre ledit élément périphérique et ledit élément central,
• échanger, via ledit canal sécurisé, les données nécessaires à l'appairage OOB de la radio Bluetooth, et procéder audit appairage.

2. Procédé de sécurisation selon la revendication précédente, **caractérisé en ce que** ladite pile protocolaire comprend, entre autres, une couche spécialisée dans la fragmentation/défragmentation, une couche spécialisée dans le chiffrement/déchiffrement.

3. Procédé de sécurisation selon l'une quelconque des revendications précédentes, **caractérisé en ce que** ladite procédure d'authentification forte et mutuelle entre ledit élément périphérique et ledit élément central met en œuvre :
• deux clés filles K_{aNSP} et K_{aNSC} issues d'une clé mère initiale Kₐ chargée dans ledit élément périphérique lors de sa fabrication et si l'élément central est un système lui-même embarqué, il est alors également chargé par cette clé Kₐ lors de sa fabrication, ou si l'élément central est un système de type PC se trouvant en zone physiquement sécurisée, il a alors accès à cette clé Kₐ dans une base de données à accès sécurisé, ladite clé mère initiale Kₐ étant différenciée par le numéro de série (NSp, NS_{c}) desdits éléments,
• deux nombres aléatoires (NA₁, propre à l'élément périphérique, NA₂, propre à l'élément central),
• un algorithme de chiffrement symétrique, tel que, notamment, l'algorithme de chiffrement symétrique AES-(128, 192 ou 256 bits),
et consiste en un échange en deux temps :
- une demande de génération desdits nombres aléatoires (NA₁, NA₂),
∘ ledit élément périphérique génère un aléa NA₁ et ledit élément périphérique envoie audit élément central son aléa NA₁ ainsi que son numéro de série NSₚ,
∘ ledit élément central génère un aléa NA₂ et envoie audit élément périphérique son aléa NA₂ ainsi que son numéro de série NS_{c},
- l'établissement d'un canal sécurisé de communication entre ledit élément périphérique et ledit élément central par :
∘ la génération, par les deux parties en communication que sont ledit élément périphérique et ledit élément central, d'une clé de session d'authentification KSₐ ,entre autres, à partir de la clé mère initiale Kₐ, des nombres aléatoires (NA₁, NA₂) et des numéros de série (NS_{P}, NSc) desdits éléments, destinée à permettre aux deux parties en communication que sont ledit élément périphérique et ledit élément central, de générer un certificat, ledit certificat étant principalement basé sur la clé de session d'authentification KSₐ et des numéros de série (NS_{P}, NSc) desdits éléments en communication, chacune des deux parties en communication que sont ledit élément périphérique et ledit élément central, se transmettant une portion distincte du certificat précédemment généré, chacune des parties distantes étant alors apte à vérifier la portion reçue et prouvant ainsi l'appartenance mutuelle à l'application,
∘ si la vérification des portions de certificat se termine avec succès, les deux parties en communication que sont ledit élément périphérique et ledit élément central, génère une clé de session de chiffrement KS_{c}, destinée à permettre le chiffrement des communications ultérieures via au moins ledit ensemble restreint Eᵣ de requêtes et réponses accessibles audit élément central, la clé de session de chiffrement KS_{c} s'élaborant à partir de la clé de session d'authentification KSₐ et de la clé mère de chiffrement K_{c} chargée dans lesdits éléments lors de leur fabrication, alors que si le système extérieur est un système lui-même embarqué, il a été alors également chargé par cette clé K_{c} lors de sa fabrication, et si ce dernier est un système de type PC se trouvant en zone physiquement sécurisée, ce dit dernier a alors accès à cette clé K_{c} dans une base de données à accès sécurisé.

4. Procédé de sécurisation selon l'une quelconque des revendications précédentes, **caractérisé en ce que** ledit protocole assurant un mécanisme d'authentification forte et mutuelle entre ledit élément périphérique et ledit élément central est un protocole sériel.

5. Procédé de sécurisation selon la revendication précédente, **caractérisé en ce que** chaque trame de requête et réponse émise au cours dudit protocole sériel est constituée de fragments de taille égale, et **en ce que** chaque fragment est, avant son envoi, tout d'abord rendu unique en insérant un aléa ou incrément 'ALEAINC' dans la donnée en clair à transmettre puis chiffré en employant, entre autres, une clé de session de chiffrement KS_{c}.

6. Procédé de sécurisation selon l'une des revendications 3 ou 4 et les revendications 5 à 6, **caractérisé en ce que** ladite clé de session de chiffrement KS_{c} est générée à partir d'une clé mère de chiffrement K_{c} différenciée par ladite clé de session d'authentification KSₐ, ladite clé mère de chiffrement K_{c} ayant été initialement chargée respectivement lors de sa fabrication dans ledit élément périphérique et si l'élément central est un système lui-même embarqué, il a été alors également chargé par cette clé K_{c} lors de sa fabrication, alors que si ce dernier est un système de type PC se trouvant en zone physiquement sécurisée, il a alors accès à cette clé K_{c} dans une base de données à accès sécurisé.

7. Procédé de sécurisation selon l'une quelconque des revendications précédentes, **caractérisé en ce que** ladite interface de communication sans fil est radioconnectée selon la technologie Bluetooth basse consommation BLE et **en ce que** ledit serveur de données est un serveur GATT.

8. Procédé d'appairage selon la revendication précédente, **caractérisé en ce que** ledit ensemble restreint Eᵣ de requêtes et réponses accessibles audit élément central est un ensemble de caractéristiques d'un des services dudit serveur GATT.

9. Procédé d'appairage selon la revendication 7 ou 8, **caractérisé en ce que** ledit ensemble restreint Eᵣ de caractéristiques dudit serveur GATT accessibles audit élément central comprend au moins, une caractéristique dite IN pour l'émission de requêtes et pour laquelle le droit d'accès dudit élément central est de type ECRITURE-LECTURE, une caractéristique dite OUT pour l'émission de réponses et pour laquelle le droit d'accès dudit élément central est de type LECTURE-NOTIFICATION ou bien LECTURE-INDICATION.

10. Procédé de sécurisation selon la revendication 9, **caractérisé en ce qu'**il comprend en outre une étape consistant, une fois la procédure d'authentification réussie et un canal sécurisé de communication établi par le biais du chiffrement des données transitant par les caractéristiques dites IN et OUT du serveur GATT, à transmettre, par ce lien alors sécurisé et à l'aide des requêtes/réponses permettant la transmission des données d'appairage de la radio Bluetooth de la pile protocolaire, les données secrètes nécessaires à l'initiation de la procédure d'appairage OOB de la radio Bluetooth.

11. Procédé d'appairage selon la revendication précédente, **caractérisé en ce que**, une fois la dernière étape de la procédure d'appairage OOB de la radio Bluetooth atteinte, ladite radio Bluetooth va permettre de sécuriser les données transitant dans l'air par le biais de sa propre procédure de chiffrement, toutes les caractéristiques du serveur GATT et les données applicatives qui s'y rattachent, initialement inaccessibles, puisque réputées restreintes d'accès tant qu'un niveau d'authentification et/ou de chiffrement suffisant n'a pas été atteint, devenant alors accessibles et ce de manière sécurisée, par ledit élément central.

## Patentansprüche

1. Sicherheitsverfahren in Hinblick auf ein einfaches und gesichertes SSP-Pairing vom Typ "außerhalb des Bandes" (OOB: Out of Band) des Bluetooth-Radios in dem Band zwischen einem peripheren Element und mindestens einem zentralen Element, die jeweils eine drahtlose Kommunikationsschnittstelle besitzen, **dadurch gekennzeichnet, dass** es mindestens die folgenden Schritte umfasst
• Initiieren einer Verbindung zwischen dem peripheren Element und dem zentralen Element, um eine nicht verschlüsselte Verbindung zwischen dem peripheren Element und dem zentralen Element über die drahtlose Kommunikationsschnittstelle aufzubauen, wobei das periphere Element einen Datenserver einsetzt, bei dem ursprünglich nur eine beschränkte Einheit Eᵣ von Anfragen und Antworten für das zentrale Element zugänglich ist,
• Erstellen eines protokollarischen Kommunikations-Stacks zwischen dem peripheren Element und dem zentralen Element ausgehend von der beschränkten Einheit Eᵣ von Anfragen und Antworten, die für das zentrale Element zugänglich sind, wobei das erstellte protokollarische Stack ein Protokoll anwendet, das unter anderem ein starkes und zwischen dem peripheren Element und dem zentralen Element gegenseitiges Authentifizierungsverfahren einsetzt,
• Aufbauen am Ende des starken und gegenseitigen Authentifizierungsverfahrens eines gesicherten Kommunikationskanals zwischen dem peripheren Element und dem zentralen Element,
• Austauschen über den gesicherten Kanal der für das OOB Pairing des Bluetooth-Radios nötigen Daten und Vornehmen des Pairings.

2. Sicherheitsverfahren nach dem vorstehenden Anspruch, **dadurch gekennzeichnet, dass** das protokollarische Stack unter anderem eine in der Fragmentierung/Defragmentierung spezialisierte Schicht, eine in der Chiffrierung/Dechiffrierung spezialisierte Schicht umfasst.

3. Sicherheitsverfahren nach einem der vorstehenden Ansprüche, **dadurch gekennzeichnet, dass** das starke und gegenseitige Authentifizierungsverfahren zwischen dem peripheren Element und dem zentralen Element Folgendes einsetzt:
• zwei Tochterschlüssel K_{aNSP} und K_{aNSC}, die aus einem ursprünglichen Mutterschlüssel Kₐ stammen, der bei dessen Herstellung in das periphere Element geladen wird, und falls das zentrale Element selbst ein eingebettetes Element ist, es somit ebenfalls durch diesen Schlüssel Kₐ in eine Datenbank mit gesichertem Zugang geladen wird, wobei der ursprüngliche Mutterschlüssel Kₐ durch die Seriennummer (NS_{P}, NS_{C}) der Elemente unterschieden wird,
• zwei Zufallszahlen (NA₁, dem peripheren Element eigen, NA₂, dem zentralen Element eigen),
• einen symmetrischen Chiffrieralgorithmus, wie insbesondere den symmetrischen Chiffrieralgorithmus AES-(128, 192 oder 256 Bits),
und aus einem Austausch in zwei Phasen besteht:
- einem Antrag zum Generieren der Zufallszahlen (NA₁, NA₂),
∘ wobei das periphere Element eine Zufälligkeit NA₁ generiert und das periphere Element dem zentralen Element seine Zufälligkeit NA₁, sowie seine Seriennummer NS_{P} sendet,
∘ das zentrale Element eine Zufälligkeit NA₂ generiert und dem peripheren Element seine Zufälligkeit NA₂, sowie seine Seriennummer NS_{c} sendet,
- dem Aufbau eines gesicherten Kommunikationskanals zwischen dem peripheren Element und dem zentralen Element, durch:
∘ das Generieren, durch die beiden in Kommunikation befindlichen Parteien, die das periphere Element und das zentrale Element sind, eines Authentifizierungssitzungsschlüssels KSₐ, unter anderem aus dem ursprünglichen Mutterschlüssel Kₐ, den Zufallszahlen (NA₁, NA₂) und den Seriennummern (NS_{P}, NS_{C}) der Elemente, das dazu bestimmt ist, den beiden in Kommunikation befindlichen Parteien, die das periphere Element und das zentrale Element sind, zu erlauben, ein Zertifikat zu generieren, wobei das Zertifikat hauptsächlich auf dem Authentifizierungssitzungsschlüssel KSₐ und den Seriennummern (NS_{P}, NS_{C}) der in Kommunikation befindlichen Elemente basiert, wobei jede der beiden in Kommunikation befindlichen Parteien, die das periphere Element und das zentrale Element sind, einander einen unterschiedlichen Abschnitt des zuvor generierten Zertifikats übertragen, wobei jede der beabstandeten Parteien somit imstande ist, den empfangenen Abschnitt zu überprüfen, und somit die gegenseitige Zugehörigkeit zur Anwendung beweist,
∘ falls die Überprüfung der Zertifikatsabschnitte erfolgreich abgeschlossen wird, die beiden in Kommunikation befindlichen Parteien, die das periphere Element und das zentrale Element sind, einen Chiffriersitzungsschlüssel KS_{c} generieren, der dazu bestimmt ist, die Chiffrierung der späteren Kommunikationen über mindestens die beschränkte Einheit Eᵣ von Anfragen und Antworten, die für das zentrale Element zugänglich sind, zu ermöglichen, wobei der Chiffriersitzungsschlüssel KS_{c} ausgehend von dem Authentifizierungssitzungsschlüssel KSₐ und dem Chiffriermutterschlüssel K_{c} ausgearbeitet wird, der bei deren Herstellung in die Elemente geladen wird, während, falls das externe System selbst ein eingebettetes System ist, es somit ebenfalls durch diesen Schlüssel K_{c} bei dessen Herstellung geladen worden ist, und falls dieses letztere ein System vom Typ PC ist, der sich in einer physikalisch gesicherten Zone befindet, dieses letztere somit Zugang zu diesem Schlüssel K_{c} in einer Datenbank mit gesichertem Zugang aufweist.

4. Sicherheitsverfahren nach einem der vorstehenden Ansprüche, **dadurch gekennzeichnet, dass** das Protokoll, das einen starken und gegenseitigen Authentifizierungsmechanismus zwischen dem peripheren Element und dem zentralen Element gewährleistet, ein serielles Protokoll ist.

5. Sicherheitsverfahren nach dem vorstehenden Anspruch, **dadurch gekennzeichnet, dass** jeder Anfrage- und Antwortraster, der im Laufe des seriellen Protokolls ausgegeben wird, aus Fragmenten gleicher Größe gebildet wird, und dadurch, dass jedes Fragment vor seiner Versendung zuerst eindeutig gemacht wird, indem eine Zufälligkeit oder ein Inkrement ,ALEAINC' in das zu übertragende Datum im lesbaren Zustand eingefügt wird, und danach, unter Anwendung von, unter anderem, einem Chiffriersitzungsschlüssel KS_{c} chiffriert wird.

6. Sicherheitsverfahren nach einem der Ansprüche 3 oder 4, und den Ansprüchen 5 bis 6, **dadurch gekennzeichnet, dass** der Chiffriersitzungsschlüssel KS_{c} ausgehend von einem Chiffriermutterschlüssel K_{c} generiert wird, der durch den Authentifizierungssitzungsschlüssel KSₐ differenziert wird, wobei der Chiffriermutterschlüssel K_{c} ursprünglich jeweils bei seiner Herstellung in das periphere Element geladen worden ist, und falls das zentrale Element ein System ist, das selbst eingebettet ist, es ebenfalls durch diesen Schlüssel K_{c} bei seiner Herstellung geladen worden ist, während, falls dieses letztere ein System vom Typ PC ist, der sich in einer physikalisch gesicherten Zone befindet, es somit Zugang zu diesem Schlüssel K_{c} in einer Datenbank mit gesichertem Zugang aufweist.

7. Sicherheitsverfahren nach einem der vorstehenden Ansprüche, **dadurch gekennzeichnet, dass** die drahtlose Kommunikationsschnittstelle gemäß der Bluetooth-Technologie mit niedrigem Verbrauch BLE radioverbunden ist, und dadurch, dass der Datenserver ein GATT-Server ist.

8. Pairing-Verfahren nach dem vorstehenden Anspruch, **dadurch gekennzeichnet, dass** die beschränkte Einheit Eᵣ von Anfragen und Antworten, die für das zentrale Element zugänglich sind, eine Einheit von Merkmalen eines der Dienste des GATT-Servers ist.

9. Pairing-Verfahren nach Anspruch 7 oder 8, **dadurch gekennzeichnet, dass** die beschränkte Einheit Eᵣ von Merkmalen des GATT-Servers, die für das zentrale Element zugänglich sind, mindestens ein sogenanntes IN-Merkmal zum Senden von Anfragen umfasst, und bei dem das Zugangsrecht des zentralen Elements vom Typ SCHREIBEN-LESEN ist, ein sogenanntes OUT-Merkmal zum Senden von Antworten, und bei dem das Zugangsrecht des zentralen Elements vom Typ LESEN-BENACHRICHTIGEN oder LESEN-ANZEIGEN ist.

10. Sicherungsverfahren nach Anspruch 9, **dadurch gekennzeichnet, dass** es weiter einen Schritt umfasst, der darin besteht, sobald das Authentifizierungsverfahren gelungen ist, und ein gesicherter Kommunikationskanal durch die Chiffrierung der Daten, die durch die sogenannten IN- und OUT-Merkmale des GATT-Servers hindurchführen, erstellt ist, durch diesen somit gesicherten Link und mithilfe von Anfragen/Antworten, die die Übertragung der Paring-Daten des Bluetooth-Radios des protokollarischen Stacks ermöglichen, die geheimen Daten zu übertragen, die zum Initiieren des OOB-Pairings des Bluetooth-Radios notwendig sind.

11. Pairing-Verfahren nach dem vorstehenden Anspruch, **dadurch gekennzeichnet, dass** sobald der letzte Schritt des OOB-Pairing-Verfahrens des Bluetooth-Radios erreicht ist, das Bluetooth-Radio es ermöglicht, die Daten, die durch die Luft hindurchführen, anhand seines eigenen Chiffrierverfahrens zu sichern, wodurch alle Merkmale des GATT-Servers und der anwendbaren Daten, die daran gebunden sind, die ursprünglich nicht zugänglich waren, da sie als mit beschränktem Zugang angesehen werden, solange keine ausreichende Authentifizierungs- und/oder Chiffrierstufe erreicht wurde, somit durch das zentrale Element zugänglich, und auf diese Weise gesichert werden.

## Claims

1. Security method for secure simple pairing SSP of the "out of band" OOB type of the Bluetooth radio in the band between a peripheral element and at least one central element each having a wireless communication interface, **characterised in that** it comprises at least the following steps of
• initiating a connection between said peripheral element and said central element, in order to establish an unencrypted connection between said peripheral element and said central element via said wireless communication interface, said peripheral element implementing a data server for which initially only a limited set Eᵣ of queries and responses is accessible to said central element,
• building a communication protocol stack between said peripheral element and said central element from said limited set Eᵣ of queries and responses accessible to said central element, said built protocol stack running a protocol implementing, *inter alia,* a strong, two-way authentication procedure between said peripheral element and said central element,
• establishing, at the end of said strong, two-way authentication procedure, a secure communication channel between said peripheral element and said central element,
• exchanging, via said secure channel, the data required for the OOB pairing of the Bluetooth radio, and carrying out said pairing.

2. Security method according to the preceding claim, **characterised in that** said protocol stack comprises, *inter alia,* a layer specialised in fragmentation/defragmentation, and a layer specialised in encryption/decryption.

3. Security method according to any of the preceding claims, **characterised in that** said strong, two-way authentication procedure between said peripheral element and said central element implements:
• two child keys K_{aNSP} and K_{aNSC} derived from an initial parent key Kₐ loaded in said peripheral element during the manufacture thereof and if the central element is a system that is itself embedded, it is thus also loaded with this key Kₐ during the manufacture thereof, or if the central element is a system of the PC type located in a physically secure area, it thus has access to this key Kₐ in a database with secure access, said initial parent key Kₐ being differentiated by the serial number (NS_{P}, NS_{C}) of said elements,
• two random numbers (NA₁, specific to the peripheral element, NA₂, specific to the central element),
• a symmetric encryption algorithm, such as, in particular, the symmetric encryption algorithm AES-(128, 192 or 256 bits),
and consists of an exchange in two steps:
- requesting the generation of said random numbers (NA₁, NA₂) ,
∘ said peripheral element generates a nonce NA₁ and said peripheral element transmits, to said central element, the nonce NA₁ thereof, as well as the serial number NS_{P} thereof,
∘ said central element generates a nonce NA₂ and transmits, to said peripheral element, the nonce NA₂ thereof, as well as the serial number NSc thereof,
- establishing a secure communication channel between said peripheral element and said central element by:
∘ having the two communicating parts formed by said peripheral element and said central element generate a session authentication key KSₐ, *inter alia,* from the initial parent key Kₐ, the random numbers (NA₁, NA₂) and the serial numbers (NS_{P}, NS_{C}) of said elements, intended to allow the two communicating parts formed by said peripheral element and said central element to generate a certificate, said certificate being primarily based on the session authentication key KSₐ and the serial numbers (NSp, NS_{c}) of said communicating elements, each of the two communicating parts formed by said peripheral element and said central element transmitting to one another a separate portion of the previously generated certificate, each of the distant parts thus being capable of verifying the portion received and thus proving that they are both part of the application,
∘ if the verification of the certificate portions is completed successfully, the two communicating parts formed by said peripheral element and said central element generate a session encryption key KS_{c}, intended to allow for the encryption of subsequent communications via at least said limited set Eᵣ of queries and responses accessible to said central element, the session encryption key KS_{c} being drawn up from the session authentication key KSₐ and from the encryption parent key K_{c} loaded in said elements during the manufacture thereof, whereas if the external system is a system that is itself embedded, it was thus also loaded with this key K_{c} during the manufacture thereof, and if the latter is a system of the PC type located in a physically secure area, said latter thus has access to this key K_{c} in a database with secure access.

4. Security method according to any of the preceding claims, **characterised in that** said protocol assuring a strong, two-way authentication mechanism between said peripheral element and said central element is a serial protocol.

5. Security method according to the preceding claim, **characterised in that** each query and response frame emitted during said serial protocol is constituted of fragments of equal size, and **in that** each fragment is, before being sent, firstly made unique by inserting a nonce or increment 'ALEAINC' in the unencrypted data to be transmitted, which is then encrypted using, *inter alia,* a session encryption key KS_{c}.

6. Security method according to one of claims 3 or 4, and claims 5 to 6, **characterised in that** said session encryption key KS_{c} is generated from a parent encryption key K_{c} differentiated by said session authentication key KSₐ, said parent encryption key K_{c} having been initially loaded respectively during the manufacture thereof in said peripheral element and if the central element is a system that is itself embedded, it was thus also loaded with this K_{c} during the manufacture thereof, whereas if the latter is a system of the PC type located in a physically secure area, it thus has access to this key K_{c} in a database with secure access.

7. Security method according to any of the preceding claims, **characterised in that** said wireless communication interface is connected by radio according to Bluetooth low energy BLE technology and **in that** said data server is a GATT server.

8. Pairing method according to the preceding claim, **characterised in that** said limited set Eᵣ of queries and responses accessible to said central element is a set of characteristics of one of the services of said GATT server.

9. Pairing method according to claim 7 or 8, **characterised in that** said limited set Eᵣ of characteristics of said GATT server accessible to said central element comprises at least one so-called IN characteristic for emitting queries and for which the access right of said central element is of the READ-WRITE type, and one so-called OUT characteristic for emitting responses and for which the access right of said central element is of the READ-NOTIFY or of the READ-INDICATE type.

10. Security method according to claim 9, **characterised in that** it further comprises a step of, once the authentication procedure is successful and a secure communication channel has been established by way of the encryption of the data transmitted via the so-called IN and OUT characteristics of the GATT server, transmitting, via this now secure link and by way of the queries/responses allowing for the transmission of the pairing data of the Bluetooth radio of the protocol stack, the secret data required to initiate the OOB pairing procedure of the Bluetooth radio.

11. Pairing method according to the preceding claim, **characterised in that** once the final step of the OOB pairing procedure of the Bluetooth radio is reached, said Bluetooth radio will allow the data transmitted via the air to be secured by way of its own encryption procedure, all of the characteristics of the GATT server and the application data attached thereto, initially inaccessible, since considered to have restricted access until a sufficient authentication and/or encryption level has been reached, thus becoming accessible and in this manner made secure, by said central element.
